# EUROPEAN PATENT APPLICATION

(11) **EP 3 809 191 A1**
(43) Date of publication of application: **21.04.2021**
(21) Application number: 19290104.9
(22) Date of filing: 17.10.2019
(51) Int. Cl.: G02F 1/00, G02B 5/22, A61F 9/02

(54) **NON-LINEAR OPTICAL STRUCTURE**

(71) Applicant: Université Claude Bernard Lyon 1, 69100 Villeurbanne (FR); CENTRE NATIONAL DE LA RECHERCHE SCIENTIFIQUE -CNRS-, 75016 Paris (FR); Ecole Normale Supérieure de Lyon, 69007 Lyon (FR)
(72) Inventor: PAROLA, Stéphane, 69330 Jonage (FR); LOPES, Cesar, SE-58334 Linköping (SE); CHATEAU, Denis, 69300 Caluire (FR); CHAPUT, Frédéric, 69100 Villeurbanne (FR)
(74) Representative: Regimbeau

(57) **Abstract**

The invention concerns an optical structure with non-linear optical properties comprising at least one stack comprising a central filter (1) and two optical sandwiching elements (2,3) between which said central filter (1) is interposed, wherein said central filter (1) is in a sol-gel matrix material, said material being doped with at least one optical limiting doping agent, the central filter (1) and the two optical elements (2,3) on either side thereof being assembled by bonding layers (4a, 4b) of a material based on the same sol-gel matrix as that of the central filter, the optical elements (2,3) on either side of the central filter (1) and the bonding layers (4a, 4b) each having a refractive index equal to that of the material of the central filter or only differing from this refractive index within a range of plus or minus 0.05, preferably within a range of plus or minus 0.02.

## Description

### Background of the invention

In the field of nonlinear optics, research has been carried out for several years on hybrid materials with non-linear optical properties, in particular for optical limitation applications. These materials are of particular interest when used in optical protection devices (eye, sensors) to prevent damage resulting from laser radiation, the latter being up sharply due to the strong development of technologies associated with lasers.

The advantage of non-linear absorption phenomena lies in the fact that the molecules or materials endowed with these properties react spontaneously under irradiation with very short response times, or reaction times, and very wide wavelength ranges, for example the whole visible or infra-red range for the same material. Commercial filters, on the other hand, have a narrow wavelength protection band due to linear blocking of light. As lasers today easily can change emitted wavelength, commercial linear blocking filters are becoming obsolete.

One type of hybrid material with known non-linear optical properties comprises a silicated inorganic matrix incorporating molecules, complexes and nanoparticles. WO 2011/128338 describes in this respect a method for the preparation of such a hybrid material by condensation of a silicate sol, that is to say a sol comprising oligomers of silicon oxide, according to the sol-gel method. However, the optical and mechanical properties of such a material often degrade rapidly, so that these materials do not always provide optimal protection of an optical sensor within a nonlinear optical device.

### Summary of the invention

It is an object of the invention to provide an optical structure with non-linear optical properties to overcome the disadvantages described above.

The invention aims in particular to provide such an optical structure having improved optical and mechanical properties compared to the optical structures of the state of the art.

To this end, according to one aspect, the invention proposes an optical structure with non-linear optical properties comprising at least one stack comprising a central filter and two optical elements between which said central filter is interposed. Said central filter is in a sol-gel matrix material, said material being doped with at least one optical limiting doping agent. The central filter and the two optical elements on either side thereof are assembled by bonding layers of a material based on the same sol-gel matrix as to that of the central filter, the optical elements on either side of the central filter and the bonding layers each having a refractive index equal to that of the material of the central filter, plus or minus 0.02.

The elements between which the central filter is interposed are in an undoped material based on the same sol-gel matrix as that of the central filter.

Such a structure in which a doped material is interposed between two optical elements makes it possible to limit the diffusion of oxygen in the doped material and to ensure beam focusing which is easier to achieve without increasing the quantity of dopant.

In addition, it avoids the darkening of the doped material that may be encountered with certain adhesives in case of dopants sensitive to the substances contained in the adhesives.

It thus provides a structure with excellent optical properties and limited optical losses since the index between the doped material and the adhesive is identical, or at least has a low gradient of difference.

The sol-gel matrix of the central filter and of the bonding layers is preferably selected within the following group of materials: methyltrimethoxysilane (MTMOS), methyltriethoxysilane (MTEOS), ethyltriethoxysilane (ETEOS), dimethyldimethoxysilane (DMDMOS), phenyltrimethoxysilane (PTMOS), dimethyldiethoxysilane (DMDEOS), (3-Glycidyloxypropyl)trimethoxysilane (GLYMO), (3-Glycidoxypropyl) methyldimethoxysilane (GLYDMO), 2-(3,4-Epoxycyclohexyl)ethyltrimethoxysilane, 2-(3,4-Epoxycyclohexyl)ethyl(methyl)dimethoxysilane, diethoxymethylsilane (HMDEOS), phenyltriethoxysilane (PTEOS), vinyltriethoxysilane (VTEOS), (3-Glycidyloxypropyl)trimethoxysilane (GLYEO), (3-Glycidoxypropyl) methyldiethoxysilane (GLYDEO), 2-(3,4-Epoxycyclohexyl) ethyl(methyl)diethoxysilane and 2-(3,4-Epoxycyclohexyl)ethyltriethoxysilane, and their mixtures, advantageously methyltriethoxysilane (MTEOS), ethyltriethoxysilane (ETEOS) and their mixtures.

The sol-gel matrix of the bonding layers can for example be methyltriethoxysilane (MTEOS), with a concentration of methyltriethoxysilane (MTEOS) in its solvent higher than 80% in weight, advantageously between 82 to 90 % in weight.

The doping agent can be any functional entity that will confer specific optical limiting properties to the material. Advantageously, the doping agent are visible and/or Near Infra-Red photochromic and/or optical power limiting agents.

Photochromic agents and optical power limiting agents are examples of such doping agents. The doping agents are chosen among organic, organometallic or inorganic molecular species, as well as among inorganic nanomaterials. The solubility of the organic or organometallic doping agents incorporated must be high enough in the solvent that is compatible with the sol. In some cases, supplementary quantities of solvent are introduced in the sol to completely dissolve the organic or organo-metallic doping agent. Increasing temperature of the sol can play the same role. Mixtures of doping agents can easily be achieved using this process, even if they present different solubilities.

Depending on the bandwidth to be covered, a single molecule or a mixture of a plurality of molecules can be used to cover all the necessary wavelengths. Typically, a mixture of 2 or 3 doping molecules can be used for large bandwidth in the visible field, whereas a single doping molecule can be contemplated for protection of small bandwidths in the near infrared.

For visible wavelengths, preferred doping agents can be selected within the following group: 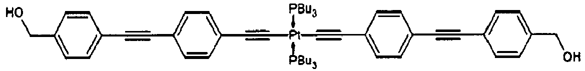 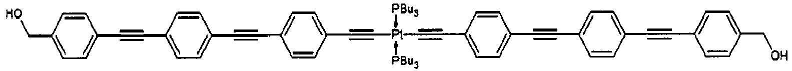 (also named PE2 and PE3 in the following text) or their mixtures.

Other doping agents can be contemplated, such as oligofluorene (for visible wavelengths) or non-linear absorbing chromophores (azabodipy) for wavelengths in the near Infra-Red field.

Preferably, the central filter and the optical elements between which it is interposed are each between 0,5 mm and 10 mm thick, advantageously between 0,75 mm and 3 mm. They are typically of a thickness equal to 1 or 2 mm.

The invention also proposes a method of manufacturing an optical structure, wherein the central filter and the two optical elements on either side thereof are bonded at a temperature between 45°C to 120°C, advantageously between 50 °C and 70 °C, and under a pressure of between 0.1 to 30 Kg/cm2, advantageously between 5 and 20 Kg/cm2 .

Advantageously, said method uses a temperature-regulating press.

### Brief description of the drawings

Other characteristics and advantages of the invention appear from the following description of particular embodiments of the invention, given as nonlimiting examples, and with reference to the accompanying drawings, in which:
- Figure 1 is a schematic representation of an optical structure according to the invention;
- Figure 2 presents the transmission spectra obtained with and without anti-reflective layers;
- Figures 3a and 3b are schematic section views of the optical structure of a first sample used in a comparison test;
- Figures 4a and 4b are schematic section views of the optical structure of a second sample used in said comparison test;
- Figure 5 is a graph on which the transmission curves of the samples of figures 3a, 3b and 4a, 4b are provided;
- Figure 6 provides the transmitted energy versus the laser energy input tested for the same samples at 532 nm.

### Detailed description of embodiments

### Optical structure

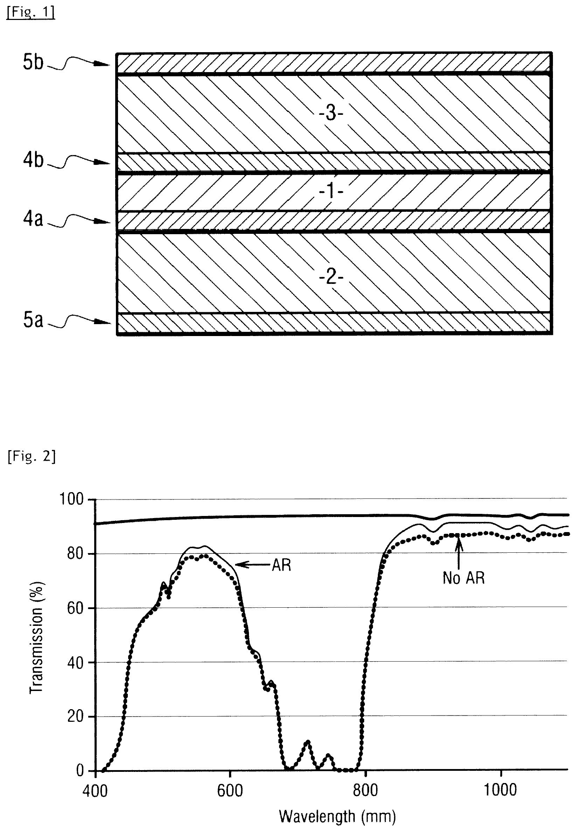

The structure shown in FIG. 1 is a stack comprising:
- a central filter 1,
- sandwiching optical elements 2 and 3 between which the filter 1 is interposed,
- layers of adhesive 4a and 4b interposed between the central filter 1 and, on the one hand, optical element 2 (adhesive layer 4a) and, on the other hand, optical element 3 (adhesive layer 4b),
- anti-reflective layers 5a and 5b deposited on the layers 2 and 3.

The central filter 1 and the optical elements 2 and 3 are for example each of a thickness between 0.5 mm and 10 mm, typically of a thickness of the order of 1 or 2 mm.

For example, the central filter 1 is 1 mm thick, while the two optical elements 2 and 3 are 2 mm thick.

Different diameters are possible for filter 1 and the sandwiching optical elements 2 and 3. By way of example, a typical filter diameter is of the order of 1 cm (2 cm in diameter for example).

### Central filter 1

Central filter 1 comprises a silicated inorganic sol-gel matrix, which incorporates optical limiting chromophores.

The matrix allows good transmission properties at visible, NIR and IR wavelengths, whereas the incorporated chromophores are chosen to block either high intensity visible or NIR wavelengths typically from 380 nm and up to 1800 nm.

### Inorganic matrix

The inorganic matrix is for example of the type described in the previous application WO2011128338. The following monomer materials can be mentioned: methyltrimethoxysilane (MTMOS), methyltriethoxysilane (MTEOS), ethyltriethoxysilane (ETEOS), dimethyldimethoxysilane (DMDMOS), dimethyldiethoxysilane (DMDEOS), diethoxymethylsilane (HMDEOS), phenyltriethoxysilane (PTEOS) and vinyltriethoxysilane (VTEOS).

Mixtures of these materials can also be contemplated.

In a preferred embodiment, the monomer is selected among methyltriethoxysilane, ethyltriethoxysilane and their mixtures.

The solvent is an alcohol and is advantageously ethanol.

WO 00/35818 can be consulted for more details.

### Incorporated doping agent

For visible wavelengths, a preferred optical limiting doping agent can be a platinum-based chromophore such as those proposed in WO201128338, for example, a platinum phenylacetylure corresponding to the following formula 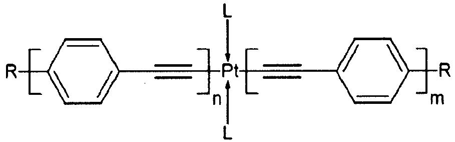 where :
- n and m are chain lengths,
- L denote ligands generally of phosphine type,
- R denotes terminal groups, typically -H, -OH or groups improving solubility as t-Bu3.

Advantageously, n and m are 2 or 3, L is PBu₃ and R is CH₂OH.

Preferred chromophores for the visible range are: 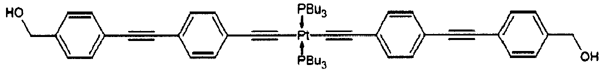 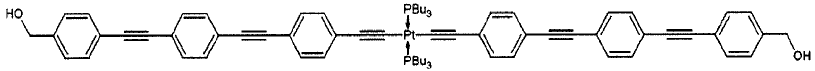 respectively named PE2 and PE3 in all the present text.

Typical doping concentrations can be
- from 1 to 500 mM for PE2, preferably from 10 mM to 400 mM and more preferably from 20mM to 70 mM ;
- from 0,1 to 100 mM for PE3, preferably from 1 mM to 50 mM and more preferably from 5mM to 30 mM.

Inorganic matrix with those doped chromophores typically have a high transmittance within the visible domain (between 450-700 nm), as well as good absorption properties in a range between 700 and 800 nm.

Other doping agents can be contemplated, such as oligofluorene (for visible wavelengths).

Non-linear absorbing chromophores belonging to the azabodipy family and incorporated into a sol-gel monolithic matrix can also be used for wavelengths in the near Infra-Red region (between 1200 and 1600 nm).

They provide a maximal efficiency around 1300 nm.

Examples of such non-linear chromophores are described in:
"Efficient hybrid materials for optical power limiting at telecommunication wavelengths - Denis Château, Quentin Bellier, Frederic Chaput, Patrick Feneyrou, Gerard Berginc, Olivier Maury, Chantal Andraud and Stephane Parola - Mater. Chem. C, 2014, 2, 5105-5110.

### Optical elements 2 and 3

Optical elements 2 and 3 are of a glass material based on the same sol-gel matrix as that of the central filter.

They are undoped.

Their refractive index equals that of central filter 1 or only differ from it within a range of plus or minus 0.05 (preferably plus or minus 0.02).

### Bonding layers 4a, 4b

The adhesive material used to bond central filter 1 with the two optical elements 2 and 3 is chosen with a refractive index approximately equal to that of the central filter hybrid material plus or minus 0.05, preferably plus or minus 0.02.

Using an identical index between the central filter material and the adhesive material (or at least a low index gradient between the central filter material and the adhesive) helps to limit optical losses and allows a good focusing.

The adhesive material is chosen of the same sol-gel matrix material as that of the central filter 1.

The chromophores of the central filter 1 might be sensitive to many substances contained in adhesives, causing potential yellowing or even browning of doped materials.

The choice of an adhesive material in the same matrix of sol-gel matrix material as that used for the central filter 1 avoids this problem and allows to obtain very good optical properties (see experimental results here after).

The ellipsometry measurements show the low influence of doping on the refractive index and, therefore, the variations in indices in the assembly are limited.

The sol-gel matrix of the bonding layers is preferably concentrated (at least 80% in weight) to obtain a viscous adhesive, allowing adherence at low temperature.

### Anti-reflective layers 5a, 5b

Anti-reflective layers 5a, 5b can be of classical antireflective compounds such as those described and proposed in WO2009133264.

They can also be coatings obtained through sol-gel techniques, the mineral alkoxide which is used being for example a tetraalkoxysilane, preferably tetramethoxysilane (acronym TMOS), and/or else further a tetraethoxysiiane (or TEOS) as proposed in WO2010034936.

They are advantageously provided - as shown in Figure 1 - on each of the free faces of the stacking that constitutes the optical structure.

In a possible embodiment, only the front face of the structure has an anti-reflective layer (as it is the one which is the most submitted to potential damages).

### Assembly process

The following describes assembly examples for an optical structure of the type here above mentioned.

In these examples, optical elements 2 and 3 and bonding layers 4a, 4b are in MTEOS, while the central filter 1 contains a mixture of PE2 and PE3 dopants (MTEOS doped PE2 50 mM and PE3 10 mM).

Bonding layers 4a and 4b are made from a sol-gel matrix of MTEOS, which is concentrated 96% in mass in ethanol by vacuum evaporation and solvent change.

This sol-gel matrix is used as adhesive to assemble optical elements 2 and 3 to filter 1 (bonding layers 4a, 4b).

A pressure of about 60 g/cm² is applied for 72 hours at 45°C to ensure adhesion.

Alternatively, in another implementation, the bonding occurs :
- at higher temperatures to allow faster drying of the adhesive and
- at greater pressure so that the layers of adhesive are thinner.

A press with temperature control is used to ensure reproducibility.

This press is, for example, a manual press.

It allows a controlled pressing at a temperature between 50°C to 70°C, advantageously between 55 °C and 65 °C, typically 60 °C, which permits a rapid evaporation of ethanol which is the solvent of the MTEOS matrix used.

The bonding pressure is much greater than the conventional bonding pressure and is typically between 0.1 and 30 kg/cm², advantageously between 10 and 20 Kg/cm².

It will be noted in general that the proposed inorganic matrices - and in particular the matrices of MTEOS - have a very good mechanical strength under pressure. The matrices of MTEOS support up to 2T / cm² pressures.

Such a bonding makes it possible to obtain bonded materials, with a good transparency in the visible wavelengths, and especially to achieve the assembly of the filter and the sandwiching optical elements simultaneously in only 1h30, i.e. a time saving of 6 days.

Other adhesive compositions are possible, especially glues with a lower concentration in the gel.

Typically, for MTEOS matrices, the concentration in ethanol can be between 82% and 90% (86% +/- 4%).

This makes it possible to work under the conditions indicated above with a better distribution of the adhesive.

The bonding at high pressure limits the risk of cracks due to the formation of bubbles in the material.

The anti-reflective layer or layers 5a, 5b are deposited in a conventional manner, by prior deposition on the layers 2 and/or 3.

In an alternative embodiment, the stack comprising filter 1 and bonded optical elements 2 and 3 between which filter 1 is interposed can be sandwiched between neutral silica glasses. Among the two sandwiching glasses, at least the front surface of the front glass is covered by an anti-reflective layer.

### Experimental results

The structures thus manufactured have a very good optical quality.

They allow excellent results in optical limitation, with a substantive improvement of the overall performance of the system.

An optical structure with a central filter 1 in a doped material corresponding to those here-above mentioned (PE2 50 mM, PE3 10 mM), sandwiched between two neutral optical elements 2, 3, of the same MTEOS matrix has been tested. A better protection threshold has been noted, together with a higher damage threshold. The global transmission quality is also improved.

The transmission losses are very low (at most of the order of 0.5% in the visible range) between the doped material and the assembly which is five times thicker. This shows the good behavior of the bonding layers as well as the excellent transparency of undoped materials.

FIG.2 further presents the transmission spectra obtained with and without anti-reflective layers ("AR" and "No AR") and shows that anti-reflective layers 5a, 5b also allow improvement of the optical quality.

### Comparison examples

Two further examples have been tested.

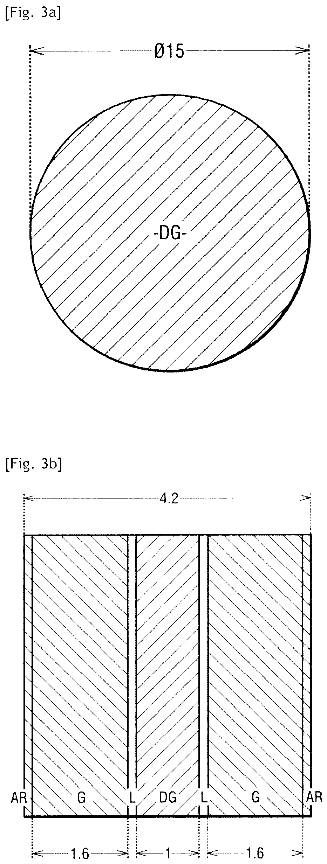

### Sample S1 (figures 3a and 3b)

An optical structure of 15 mm diameter has been tested, said optical structure comprising a central filter DG of doped glass sandwiched between two neutral optical elements G.

The doped central filter DG was of MTEOS matrix doped with a mixture of PE2 and PE3 (PE2 50 mM, PE3 10 mM).

It presented a thickness of 1mm.

Neutral optical elements G were of pure silica.

They presented a thickness of 1.6 mm.

They were adhered to filter DG through bonding layers L of EPO-TEK OG175 from EPOXY TECHNOLOGY INC., USA (said bonding layers being thus not made of a material with an MTEOS matrix, as is the case with the doped central filter).

Width of the optical structure obtained is 4,2 mm.

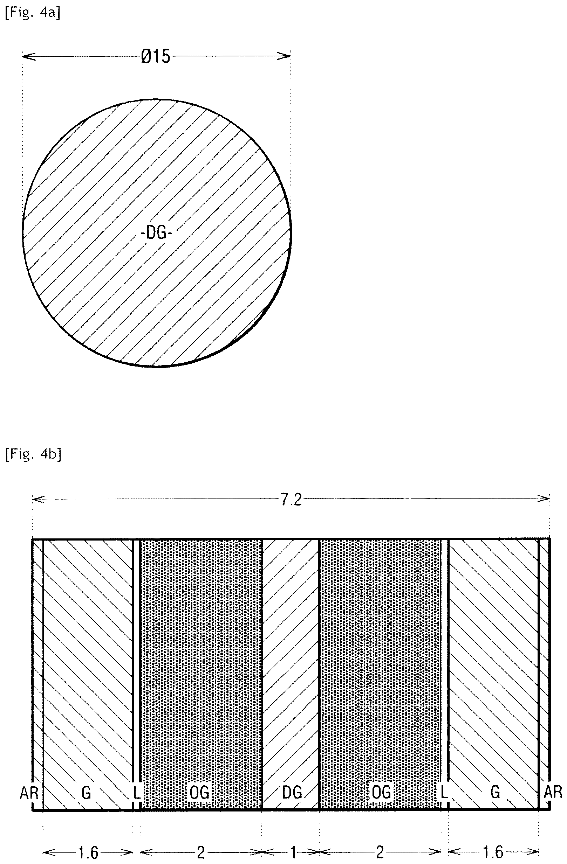

### Sample S2 (figures 4a and 4b)

In said example, undoped optical elements OG of a glass made out of the same MTEOS matrix have been used to sandwich doped filter DG.

OG optical elements are 2mm thick, whereas the DG central filter 1 is 1mm thick.

Bonding between the DG central filter and the OG sandwiching optical elements has been achieved through the assembly process here above described using an adhesive material of the same MTEOS matrix than that of the central filter DG and of the sandwiching undoped optical elements OG.

The optical structure obtained has further been sandwiched between two commercial pure silica glasses G (1,6 mm thick) covered with anti-reflective layers on their external faces AR.

The bonding between glasses G and glasses OG is realized through the same commercial adhesive material as that used for sample 1 (layers L).

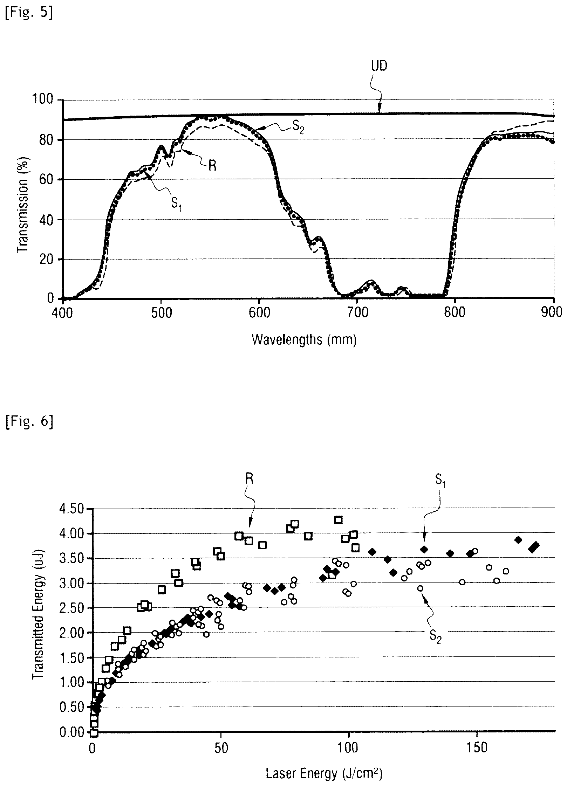

Transmission curves are provided on figure 5, whereas figure 6 provides the transmitted energy versus the laser energy input.

Sample S2 has the best transmission curve, both samples S1 and S2 having a better transmission response than a reference sample R of a typical prior art limitation optical structure with linear response (figure 5).

The reference sample R allows a transmitted energy, 4 - 4,5 µJ, whereas AR-coated samples 1 and 2 allow 3 - 3,5 µJ.

The Laser Induced Damage Threshold (LIDT) was tested at 532 nm, with pulses of 5.5 nanoseconds and with the focus in the middle of the samples (for every laser pulse the sample was moved).

The damage threshold for reference R is -100 J/cm2 and damage occurs at the front entrance.

It is around 160 - 190 J/cm2 for sample S1 (damage in the commercial bonding layer L at the front).

It is considerably improved (-250 J/cm²) with sample S2 using a bonding layer with the same sol-gel matrix as that of the central doped filter DG (see figure 6) (damage in the commercial bonding layer L at the front).

## Claims

1. Optical structure with non-linear optical properties comprising at least one stack comprising a central filter (1) and two sandwiching optical elements (2,3) between which said central filter (1) is interposed, wherein said central filter (1) is in a sol-gel matrix material, said material being doped with at least one optical limiting doping agent, the central filter (1) and the two optical elements (2,3) on either side thereof being assembled by bonding layers (4a, 4b) of a material based on the same sol-gel matrix as that of the central filter, the optical elements (2,3) on either side of the central filter (1) and the bonding layers (4a, 4b) each having a refractive index equal to that of the material of the central filter or only differing from this refractive index within a range of plus or minus 0.05, preferably within a range of plus or minus 0.02.

2. Optical structure according to claim 1, wherein the optical elements (2, 3) between which the central filter (1) is interposed are in an undoped material based on the same sol-gel matrix as that of the central filter (1).

3. Optical structure according to any of the preceding claims, wherein the sol-gel matrix of the central filter (1) and of the bonding layers (4a,4b) is selected within the following group of materials: methyltrimethoxysilane (MTMOS), methyltriethoxysilane (MTEOS), ethyltriethoxysilane (ETEOS), dimethyldimethoxysilane (DMDMOS), phenyltrimethoxysilane (PTMOS), dimethyldiethoxysilane (DMDEOS), (3-Glycidyloxypropyl)trimethoxysilane (GLYMO), (3-Glycidoxypropyl) methyldimethoxysilane (GLYDMO), 2-(3,4-Epoxycyclohexyl)ethyltrimethoxysilane, 2-(3,4-Epoxycyclohexyl)ethyl(methyl)dimethoxysilane, diethoxymethylsilane (HMDEOS), phenyltriethoxysilane (PTEOS), vinyltriethoxysilane (VTEOS), (3-Glycidyloxypropyl)trimethoxysilane (GLYEO), (3-Glycidoxypropyl) methyldiethoxysilane (GLYDEO), 2-(3,4-Epoxycyclohexyl) ethyl(methyl)diethoxysilane and 2-(3,4-Epoxycyclohexyl)ethyltriethoxysilane, and their mixtures, advantageously methyltriethoxysilane (MTEOS), ethyltriethoxysilane (ETEOS) and their mixtures.

4. Optical structure according to claim 3, wherein the sol-gel matrix of the bonding layers (4a, 4b) is methyltriethoxysilane (MTEOS), with a concentration of methyltriethoxysilane (MTEOS) in its solvent higher than 80% in weight, advantageously between 82 to 90 % in weight.

5. Optical structure according to claim 3 or claim 4, wherein the doping agent are visible and/or Near Infra-Red photochromic and/or optical power limiting agents.

6. Optical structure according to any of the preceding claims, wherein at least a front face of the structure is covered with an anti-reflective layer.

7. Optical structure according to claim 6, wherein the stack comprising the central filter (1) and the two optical elements (2,3) between which said central filter (1) is interposed, is sandwiched between two silica glasses, among which at least the front glass is covered with an anti-reflective layer.

8. Optical structure according to any of the preceding claims, wherein the central filter and the elements between which it is interposed are each between 0.5 mm and 10 mm thick, advantageously between 0,75 mm and 3 mm.

9. A method of manufacturing an optical structure according to any of the preceding claims, wherein the central filter and the two optical elements on either side thereof are bonded at a temperature between 45°C to 120°C, advantageously between 50 °C and 70 °C, and under a pressure of between 0.1 to 30 Kg/cm², advantageously between 5 and 20 Kg/cm²

10. A method according to claim 9 in which the central filter and the two optical elements on either side thereof are bonded using a temperature-regulating press.
